# EUROPÄISCHE PATENTSCHRIFT

(11) **EP 1 247 075 B1**
(45) Veröffentlichungstag und Bekanntmachung des Hinweises auf die Patenterteilung: **26.04.2006**
(21) Anmeldenummer: 00992068.7
(22) Anmeldetag: 16.12.2000
(51) Int. Cl.: G01C 21/34, G07C 5/08, B60R 16/02

(54) **VERFAHREN UND VORRICHTUNG ZUR FAHRWEISENBEWERTUNG**
METHOD AND DEVICE FOR EVALUATING DRIVER PERFORMANCE
PROCEDE ET DISPOSITIF D'EVALUATION DU STYLE DE CONDUITE

(30) Priorität: 14.01.2000 DE 10001261
(43) Veröffentlichungstag der Anmeldung: 09.10.2002
(73) Patentinhaber: DaimlerChrysler AG, 70567 Stuttgart (DE)
(72) Erfinder: ENTENMANN, Volker, 71563 Affalterbach (DE)
(86) Internationale Anmeldenummer: PCT/EP2000/012844
(87) Internationale Veröffentlichungsnummer: WO 2001/051891

(56) Entgegenhaltungen:
- WO-A-92/03803
- US-A- 4 058 796
- US-A- 5 177 685

## Beschreibung

Die Erfindung bezieht sich auf ein Verfahren und eine Vorrichtung zur Bewertung der Fahrweise eines Fahrzeugführers beim Befahren eines Verkehrswegenetzes, z.B. eines Straßenverkehrsnetzes, mit einem entsprechenden Fahrzeug, wie einem Straßenfahrzeug.

Gerade auch im Straßenverkehr stellt sich durch das ständig steigende Verkehrsaufkommen das Problem der Erzielung einer möglichst hohen Verkehrssicherheit. In diesem Zusammenhang gewinnt die moderne Verkehrstelematik immer mehr an Bedeutung. Mit ihr kann durch fahrzeugseitig vorhandene digitale Straßenkarten, in denen neben der exakten Wegenetzgeometrie weitere, auch sicherheitsrelevante Attribute abgelegt sein können, wie Fußgängerüberwege, Verkehrszeichen etc., durch eine hochgenaue Fahrzeugortung und eine umfangreiche fahrzeugseitige Sensorik der situative Kontext, in dem sich ein Fahrzeug bewegt, d.h. dessen Fahrzustand ebenso wie die Verkehrssituation, in der es sich gerade befindet, zunehmend besser automatisch erkannt werden.

Herkömmlicherweise wird eine solche Fahrzustands- und Verkehrssituationserkennung beispielsweise dazu genutzt, die Fahrweise des Fahrzeugführers zu erkennen, um sie in vorgegebener Weise zu klassifizieren, wie in eine sportliche, eine ruhige, eine ökonomische Fahrweise etc., und in Abhängigkeit davon z.B. Getriebeschaltkennlinien anzupassen oder eine Fahrwerkabstimmung vorzunehmen, oder den Fahrzeugführer vor einer aktuellen oder unmittelbar bevorstehenden Gefahrensituation bzw. vor einem fahrsicherheitsgefährdenden Überschreiten von fahrphysikalischen Grenzwerten zu warnen.

In der WO 92/03803 A1 wird ein Verfahren und eine Vorrichtung zur Fahrweisenbewertung beschrieben, bei dem abhängig vom Fahrerverhalten und Fahrzustandsparametern ein wünschenswerter Fahrzustand ermittelt wird, eine Bewertung des Fahrverhaltens des Fahrers erfolgt und diese Bewertung an den Fahrer ausgegeben wird.

Derartige Warnsysteme sind in vielerlei Ausprägungen gebräuchlich. Bei einem Typ solcher Systeme wird der Straßenverlauf insbesondere hinsichtlich Kurven- und Kreuzungsgeometrien und/oder das Vorhandensein eventueller Hindernisse auf der Strecke vorausschauend ermittelt, um den Fahrzeugführer vor einer sicherheitsgefährdenden, zu schnellen Annäherung an die entsprechenden Gefahrenpunkte zu warnen. Dabei kann die Vorausermittlung von Gefahrenpunkten auf einer digitalen Straßenkarte basieren, siehe die Offenlegungsschrift EP 0 819 912 A2 und die Patentschrift EP 0 487 280 Bl, oder auf einem den Fahrzeugfrontbereich erfassenden Bildaufnahme- und Bildverarbeitungssystem, siehe die Patentschrift US 5.757.949.

Ein weiterer Typ herkömmlicher Systeme benutzt eine digitale Straßenkarte, die um eine zusätzliche Datenbank erweitert ist, welche verkehrssicherheitsbezogene Informationen enthält, z.B. statistische Unfalldaten, aus denen Hinweise auf Unfallschwerpunkte erzeugt und z.B. per Sprachmeldung abgegeben werden, wie in der Patentschrift US 5.270.708 beschrieben, oder Sicherheitszonen, wie Wohngebiete, Schulen etc., in denen die Fahrzeugantriebsleistung und damit die mögliche Geschwindigkeit automatisch begrenzt wird, wie in der Offenlegungsschrift EP 0 745 965 Al offenbart, oder sicherheitsrelevante Informationen z.B. in Form von Verkehrszeichen, die optisch und/oder akustisch abgegeben werden, sobald sich das Fahrzeug der entsprechenden Stelle nähert, wie in der Patentschrift US 5.146.219 offenbart.

Ein weiterer Typ herkömmlicher Warnsysteme sieht die Bestimmung des Abstands zum vorausfahrenden Fahrzeug und eine Warnung des Fahrers dann vor, wenn der Abstand unter ein vorgebbares Maß abfällt, siehe die Patentschrift US 5.410.304.

Des weiteren sind Einschlafwarnsysteme bekannt, welche die Fahrzeugbewegung oder den Lenkwinkelverlauf erfassen und daraus auf den Zustand des Fahrers, insbesondere auf dessen Müdigkeitsgrad, schließen, siehe die Patentschrift EP 0 049 522 B1 und die Offenlegungsschrift DE 196 30 970 A1.

Ein generelles Problem von Warnsystemen, die den Fahrer vor bevorstehenden Gefahrensituationen warnen, liegt darin, dass der durch sie potentiell erzielbare Sicherheitsgewinn vom Fahrer möglicherweise durch eine entsprechend riskantere Fahrweise wieder kompensiert wird, da der Fahrer im Vertrauen auf das Warnsystem versucht sein kann, sich durch riskantere Fahrmanöver, als er sie ohne Warnsystem machen würde, an die Auslösegrenze des Warnsystems heranzutasten, z.B. eine Kurve so schnell zu durchfahren, dass ein vorhandenes Kurvenwarnsystem anspricht. Der Fahrer wird daher von solchen vorauswarnenden Systemen nicht wesentlich dazu angeregt, von sich aus sein Fahrverhalten bestimmten Kriterien unterzuordnen, wie sicheres Fahren mit ausreichendem Abstand zum fahrdynamischen Grenzbereich und/oder kraftstoffverbrauchsgünstiges Fahren.

Der Erfindung liegt als technisches Problem die Bereitstellung eines Verfahrens und einer Vorrichtung zur Fahrweisenbewertung zugrunde, die einen Fahrzeugführer dazu anregen können, seine Fahrweise, d.h. sein Fahrverhalten, von sich aus so zu wählen, dass es vorgebbare, gewünschte Kriterien erfüllt, z.B. hinsichtlich verkehrssicherem und/oder kraftstoffverbrauchsgünstigem Fahren.

Die Erfindung löst dieses Problem durch die Bereitstellung eines Verfahrens und einer Vorrichtung zur Fahrweisenbewertung mit den Merkmalen des Anspruchs 1 bzw. 4.

Dieses Verfahren und diese Vorrichtung sehen charakteristischerweise vor, Rückmeldeinformationen über die Fahrweise während einer vorangegangenen Verkehrssituation im nachhinein abzugeben, insbesondere auch als Information für den Fahrzeugführer darüber, wie sein Fahrverhalten während der vorangegangenen Verkehrssituation gemäß eines vorgegebenen Bewertungskriteriums zu bewerten ist. Als Bewertungskriterium kann insbesondere vorgegeben werden, ob oder wie gut das Fahrverhalten unter den gegebenen Umständen einer sicheren, nicht verkehrsgefährdenden Fahrweise entspricht, wozu neben anderen Kriterien auch ein ausreichender Abstand zum fahrdynamischen Grenzbereich gehört. Alternativ oder zusätzlich sind weitere Bewertungskriterien möglich, z.B. ein Fahrverhalten mit möglichst geringem Kraftstoffverbrauch.

Um derartige Rückmeldeinformationen erzeugen zu können, werden der aktuelle Fahrzustand und die aktuelle Verkehrssituation laufend erfaßt, ein zur aktuellen Verkehrssituation gemäß dem vorgegebenen Bewertungskriterium passender, d.h. wünschenswerter Fahrzustand als Referenzfahrzustand abgeleitet und der aktuelle Fahrzustand dadurch bewertet, dass er mit dem ermittelten Referenzfahrzustand gemäß dem Bewertungskriterium verglichen wird, d.h. festgestellt wird, ob oder wie gut der Fahrzustand dem Referenzfahrzustand entspricht bzw. wie weit er unter Verwendung des Bewertungskriteriums als Abstandsmaß von ihm entfernt liegt. Der Referenzfahrzustand ist dabei im Raum aller möglichen Fahrzustände nicht zwingend als nur punktueller Zustand zu verstehen, sondern bezeichnet im allgemeinen einen ganzen Bereich von Fahrzuständen, die in der betreffenden Verkehrssituation unter dem vorgegebenen Bewertungskriterium mögliche Soll-Fahrzustände darstellen, die das Bewertungskriterium alle gleich gut erfüllen. So kann unter dem Bewertungskriterium eines verkehrssicheren Fahrverhaltens der Referenzfahrzustand alle Fahrzustände umfassen, die in der betreffenden Verkehrssituation als sicher gelten können, z.B. ausreichenden Abstand zum fahrdynamischen Grenzbereich haben.

Die von der Erfindung vorgesehenen Rückmeldeinformationen über das Fahrverhalten im nachhinein, d.h. über das jeweils vorangegangene Fahrverhalten, haben gegenüber herkömmlichen Warnsystemen, die vor einer eventuell gefährlichen Verkehrssituation im voraus warnen, den fundamentalen Vorteil, dass sie ein eigenständiges Motiv für den Fahrzeugführer bilden können, sein Fahrverhalten nach dem vorgegebenen Bewertungskriterium auszurichten, z.B. eine sichere und rücksichtsvolle Fahrweise zu wählen.

Durch geeignete Gestaltung und Auswahl der abgegebenen Rückmeldeinformationen kann ein gemäß dem Bewertungskriterium wünschenswertes, richtiges Fahrverhalten vom System gelehrt und damit vom Fahrzeugführer gelernt werden, indem sie so gestaltet bzw. ausgewählt werden, dass sie das aktuelle Fahrverhalten für den Fall, dass es im wesentlichen dem Referenzfahrverhalten entspricht, gezielt positiv verstärken. Dadurch läßt sich in den meisten Fällen eine größere und länger andauernde Fahrverhaltensänderung erzielen, als dies durch negativ wirkende Zwangsmaßnahmen, wie z. B. Bestrafungsandrohungen oder zeitweiser Führerscheinentzug, möglich ist, was durch entsprechende Erkenntnisse aus der Lernpsychologie bestätigt wird.

Bei der Erfindung steht somit nicht das vorausschauende Warnen, sondern das rückblickende Bewerten im Vordergrund, und zwar dergestalt, dass die im nachhinein abgegebenen Rückmeldeinformationen für den Fahrzeugführer erkennen lassen, wie gut seine Fahrweise einer z.B. aus Verkehrssicherheitsaspekten wünschenswerten Fahrweise entsprochen hat. Dabei kann aktuelles Fahrverhalten, wenn es dem wünschenswerten Fahrverhalten entspricht, besonders positiv bewertet, d.h. "gelobt" werden, was den Fahrzeugführer motiviert, dieses Fahrverhalten beizubehalten und zu wiederholen. In gleicher Weise können die Rückmeldeinformationen natürlich auch auf fehlerhaftes bzw. kritisch zu bewertendes Fahrverhalten hinweisen.

Unter dem Bewertungskriterium hoher Verkehrssicherheit sind die Rückmeldeinformationen so gewählt, dass das Fahren im fahrdynamischen Grenzbereich nicht unterstützt wird. Wenn ein entsprechendes Vorauswarnsystem fehlt, hat dies den Vorteil, dass der Fahrzeugführer weiß, dass er allein für sein Fahrzeug und sein Fahrverhalten verantwortlich ist und nicht in Versuchung kommt, sich im Vertrauen auf ein solches Vorauswarnsystem dem fahrdynamischen Grenzbereich zu nähern.

Das erfindungsgemäße Verfahren und die erfindungsgemäße Vorrichtung beinhalten wenigstens zwei Gruppen von Rückmeldeinformationen verschiedener Kategorie. Die Abgabe der Rückmeldeinformationen wird so gestaltet, dass das Maß, d.h. die Anzahl und/oder Intensität, an abgegebenen Rückmeldeinformationen der einen Gruppe, d.h. der einen Kategorie, für den jeweiligen Bewertungszeitraum, der die ganze oder einen Teil einer jeweiligen Fahrt umfassen kann, einer oder mehrerer bewältigter Verkehrssituationen größer gehalten wird als dasjenige für die Rückmeldeinformationen der anderen Gruppe oder in einem vorgebbaren Verhältnis zu jenem gehalten wird. Beispielsweise können in dieser Ausgestaltung der Erfindung positive, "lobende" Rückmeldung einerseits und negative, "tadelnde" Rückmeldungen andererseits vorgesehen sein, wobei vorzugsweise das Maß an positiven Rückmeldungen selbst bei insgesamt weniger günstigem Fahrverhalten dasjenige an negativen Rückmeldungen stets überwiegt und letzteres bei Bedarf bis auf null reduziert werden kann, d.h. es gibt dann nur positive Rückmeldungen. Dadurch läßt sich ein positiver Gesamtrückmeldungseindruck für den Fahrer erzeugen, so dass er durch die Rückmeldungen nicht den Spaß am Fahren verliert, sondern gezielt zum gewünschten, z.B. sicheren Fahrverhalten motiviert und darin bestärkt wird, seine fahrerische Kompetenz über ein sicheres und nicht über ein riskantes Fahrverhalten zu definieren.

Bei einem nach Anspruch 2 weitergebildeten Verfahren und einer nach Anspruch 5 weitergebildeten Vorrichtung ist die Abgabe von Fahrweisenempfehlungen vorgesehen, anhand derer der Fahrzeugführer sein Fahrverhalten so ausrichten kann, dass es dem für die betreffende Verkehrssituation ermittelten Referenzfahrzustand entspricht. Die Fahrweisenempfehlungen werden dabei vorzugsweise so gewählt, dass eine ausreichende Fahrverhaltensreserve gegeben ist, unter dem Bewertungskriterium hoher Verkehrssicherheit z.B. ein ausreichender Sicherheitsabstand der empfohlenen Fahrweise zum fahrdynamischen Grenzbereich.

Ein nach Anspruch 3 weitergebildetes Verfahren und eine nach Anspruch 6 weitergebildete Vorrichtung berücksichtigen für die Informationsabgabe der Rückmeldungen und, falls vorgesehen, der Fahrweisenempfehlungen die zu erwartende Fahrerbelastung für die unmittelbar bevorstehende Verkehrssituation, d.h. für das Befahren der unmittelbar bevorstehenden Strecke, deren Zustand hierzu und zur Erfassung der aktuellen Verkehrssituation auf eine der herkömmlichen Weisen vorausgeschätzt wird. Die Informationsabgabe erfolgt dann nur in Zeiträumen, in denen der Fahrer nicht zu stark mit der bevorstehenden Fahraufgabe belastet ist, so dass er den abgegebenen Informationen ausreichende Aufmerksamkeit widmen kann.

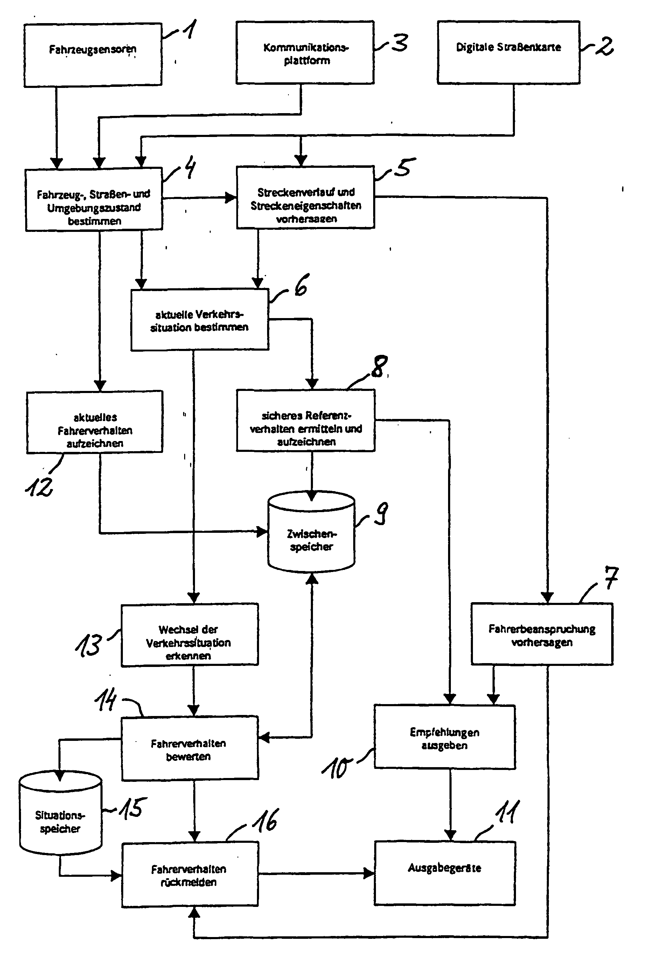

Eine vorteilhafte Ausführungsform der Erfindung ist in der Zeichnung dargestellt und wird nachfolgend beschrieben.

Die einzige Figur zeigt ein Blockdiagramm eines Verfahrens und einer Vorrichtung zur Fahrweisenbewertung mit bewertenden Fahrweisen-Rückmeldeinformationen.

In der Figur ist eine Vorrichtung zur Fahrweisenbewertung mit ihren hier interessierenden Komponenten in ihrem funktionellen Zusammenspiel blockdiagrammatisch veranschaulicht. Gleichzeitig stellt die Figur ein Flußdiagramm über den Ablauf des von dieser Vorrichtung durchgeführten Fahrweisenbewertungsverfahrens dar, wenn hierzu die einzelnen Blöcke des Blockdiagramms als Verfahrensschritte statt Systemkomponenten angesehen werden, die von den betreffenden Systemkomponenten ausgeführt werden. Im folgenden erfolgt daher parallel die Erläuterung der einzelnen Systemkomponenten und der von ihnen ausgeführten Funktionen.

Ein Sensorblock 1 umfaßt die zur Erfassung der Position und des Bewegungszustands des Fahrzeugs erforderliche Sensorik. Zur Realisierung einer solchen Sensorik kann der Fachmann auf herkömmliche Sensorsysteme zur Erfüllung dieses Zwecks zurückgreifen, was hier keiner näheren Erläuterung bedarf. Optional kann die Sensorik 1 Sensorelemente zur Erfassung des Zustands von Bedienelementen, die vom Fahrer betätigt werden, des Wegenetzzustands, d.h. im Fall von Straßenfahrzeugen des Straßenzustands, der Sichtweite und des gesamten verkehrlichen Fahrzeugumfelds umfassen.

In einer digitalen Straßenkarte 2 üblicher Art sind der Streckenverlauf, die Streckenkategorie, z.B. Autobahn, Landstraße oder Innerortsstraße, und die Fahrspuranzahl sowie bevorzugt weitere sicherheitsrelevante Attribute gespeichert, wie Fußgängerüberwege, Vorfahrtsregelungen und Geschwindigkeitsbegrenzungen.

Über eine optionale Kommunikationsplattform 3 üblicher Bauart kann das fahrzeugeigene System mit anderen Fahrzeugen, mit einer Verkehrsinformationszentrale und/oder mit anderen Kommunikationsinfrastrukturkomponenten kommunizieren.

In einer Zustandsbestimmungseinheit 4 werden der aktuelle Fahrzeug-, Straßen- und Umgebungszustand bestimmt. Speziell berechnet die Zustandsbestimmungseinheit 4 die aktuelle Position und den Bewegungszustand des Fahrzeugs aus den dazu von den entsprechenden Sensoren des Sensorblocks 1 und von der digitalen Straßenkarte 2 abgerufenen Daten. Bei zusätzlicher Heranziehung von über die Kommunikationsplattform 3 übermittelten Daten und von Daten der oben erwähnten optionalen Sensorelemente kann bei Bedarf der Fahrzeug-, Straßen- und Umgebungszustand mit verbesserter Genauigkeit bestimmt werden, beispielsweise können dann der Reibwert der Straßenoberfläche, die Sichtweite, der Abstand zum vorausfahrenden Fahrzeug und/oder Informationen über Verkehrsstörungen in die Zustandsbestimmung mit aufgenommen werden.

Eine Streckenvorhersageeinheit 5 dient der Vorausschätzung des zukünftigen Streckenverlaufs und der zukünftigen Streckeneigenschaften für einen vorgebbaren Vorhersagezeitraum anhand der von der Zustandsbestimmungseinheit 4 ermittelten aktuellen Fahrzeugposition und den Daten der digitalen Straßenkarte 2. Die Prognose des zukünftigen Streckenverlaufs umfaßt insbesondere die qualitative und quantitative Vorausschätzung von bevorstehenden Kurven. Zukünftige Streckeneigenschaften sind z.B. bevorstehende Geschwindigkeitsbegrenzungen, Kreuzungen mit entsprechenden Vorfahrtsregelungen etc.

Die von der Streckenvorhersageeinheit 5 generierten Streckenvorschaudaten werden in einer Fahrerbelastungsvorhersageeinheit 7 dazu genutzt, die zu erwartende Belastung, d.h. Beanspruchung, des Fahrzeugführers für die anstehende Fahraufgabe vorauszuschätzen und diejenigen Zeitfenster zu bestimmen, in denen die vorausgesagte Fahrerbeanspruchung unter einer vorgebbaren Schwelle liegt und die sich daher für eine Abgabe von Informationen an den Fahrer besonders eignen.

Eine Verkehrssituationsbestimmungseinheit 6 ermittelt die aktuelle Verkehrssituation anhand der Streckenvorschaudaten der Streckenvorhersageeinheit 5 sowie anhand der von der Zustandsbestimmungseinheit 4 gelieferten Zustandsdaten. So kann die Verkehrssituationsbestimmungseinheit 6 z.B. die Annäherung des Fahrzeugs an eine ampelgeregelte Kreuzung bei dichtem Nebel als eine solche Verkehrssituation selbsttätig erkennen. Gleiches gilt für alle anderen, typischerweise im Verkehr auftretenden Verkehrssituationen. Die hierzu erforderlichen Mittel und Algorithmen sind dem Fachmann aus dem Stand der Technik bekannt und brauchen daher hier nicht näher beschrieben werden.

Zu der durch die Verkehrssituationsbestimmungseinheit 6 bestimmten aktuellen Verkehrssituation ermittelt dann eine Referenzbestimmungseinheit 8 einen daran angepaßten, zugehörigen Referenzfahrzustand, was die Ermittlung von angepaßten Werten für die Fahrzeuggeschwindigkeit, die positive oder negative Fahrzeugbeschleunigung, den Längsabstand zu einem vorausfahrenden Fahrzeug, das eventuelle Setzen eines Blinkers etc. umfaßt. Dieser Referenzfahrzustand, im folgenden auch Referenzfahrverhalten bezeichnet, ist so gewählt, dass er in der gegebenen Verkehrssituation einem vorgegebenen Bewertungskriterium genügt, z.B. dem Kriterium eines sicheren Fahrverhaltens zur Erzielung hoher Verkehrssicherheit. Dabei kann der Referenzfahrzustand nicht nur einen punktuellen Zustand, sondern einen ganzen Bereich des Zustandsraums möglicher Fahrzustände bezeichnen. Er ist so gewählt, dass er ausreichende Reserven garantiert, d.h. im Fall des Kriteriums hoher Verkehrssicherheit ausreichende Sicherheitsreserven, so dass relativ kleine Abweichungen von diesem Referenzfahrverhalten noch nicht zu einem unerwünschten, z.B. sicherheitskritischen Fahrzustand führen. Der so ermittelte Referenzfahrzustand wird zum einen in einem Zwischenspeicher 9 abgelegt, der nach dem Ende des Bewertungsvorgangs wieder gelöscht werden kann. Zum anderen werden die Referenzfahrzustandsdaten von einer Empfehlungserzeugungseinheit 10 dazu genutzt, dem ermittelten Referenzfahrzustand entsprechende Fahrempfehlungen zu erzeugen und einer Ausgabeeinheit 11 zuzuführen. Letztere umfaßt ein oder mehrere Ausgabegeräte, mit denen die eingehenden Informationen für den Fahrer wahrnehmbar, z.B. optisch, haptisch und/oder akustisch, angezeigt werden können. Beispielhaft kann eine solche Fahrempfehlung die Information beinhalten, dass zum Durchfahren einer bevorstehenden Kurve eine bestimmte maximale Kurvengeschwindigkeit empfohlen wird. Wie der Name besagt, steht bei dieser Information deren Empfehlungscharakter und nicht etwa ein Warncharakter im Vordergrund.

Parallel zur Ermittlung des jeweiligen Referenzfahrzustands durch die Referenzbestimmungseinheit 8 ermittelt eine Fahrzustandsbestimmungseinheit 12 laufend den aktuellen Fahrzustand, d.h. das aktuelle Fahrverhalten, auch Fahrerverhalten genannt, anhand der ihr hierzu von der Zustandsbestimmungseinheit 4 zugeführten, erforderlichen Eingangsdaten. Dabei wird das von der Fahrzustandsbestimmungseinheit 12 ermittelte aktuelle Fahrverhalten durch die gleichen Fahrzustandsparameter beschrieben wie das von der Referenzbestimmungseinheit 8 ermittelte Referenzfahrverhalten. Die auf diese Weise von der Fahrzustandsbestimmungseinheit 12 generierten aktuellen Fahrzustandsdaten werden ebenfalls im Zwischenspeicher 9 abgelegt.

Die von der Verkehrssituationsbestimmungseinheit 6 generierten Daten über die aktuelle Verkehrssituation werden von einer Situationsänderungserkennungseinheit 13 dazu genutzt, eine Änderung der aktuellen Verkehrssituation zu erkennen, d.h. die Gesamtheit aller möglichen auftretenden Verkehrssituationen wird in eine endliche Anzahl unterschiedlicher Situationen diskretisiert, und ein Übergang von einer dieser diskretisierten Verkehrssituationen zu einer anderen wird erkannt. Wenn die Situationsänderungserkennungseinheit 13 einen solchen Verkehrssituationswechsel erkennt, meldet sie dies einer Fahrzustandsbewertungseinheit 14. Diese bewertet daraufhin das Fahrverhalten in der zuletzt durchfahrenden Verkehrssituation.

Dazu liest die Fahrzustandsbewertungseinheit 14 die im Zwischenspeicher 9 diesbezüglich abgelegten Daten aus und vergleicht das aufgezeichnete tatsächliche Fahrverhalten mit dem parallel aufgezeichneten Referenzverhalten. Diese Bewertung erfolgt nach Fahrweisenbewertungskriterien, wie sie dem Fachmann hierfür an sich geläufig sind. Im Beispiel des Bewertungskriteriums hoher Verkehrssicherheit beinhaltet die Bewertung z.B. insbesondere die Feststellung, ob das tatsächliche Fahrverhalten im fahrdynamisch unkritischen Bereich lag oder aber den fahrdynamischen Grenzbereich erreicht hatte. Das Vergleichsergebnis, d.h. die bewertete Verkehrssituation, wird in einem zugehörigen Bewertungsdatenspeicher 15, auch Situationsspeicher genannt, abgelegt. Im Zwischenspeicher 9 können dann nicht mehr benötigte Daten gelöscht werden.

Die von der Bewertungseinheit 14 vorgenommene Bewertung beinhaltet dabei insbesondere eine grobe Unterscheidung danach, ob der tatsächliche Fahrzustand dem Referenzzustand wenigstens einigermaßen entsprochen hat oder ob er sich davon merklich unterscheidet, d.h. ob ein insgesamt noch tolerables oder ein eher nicht mehr tolerierbares Fahrverhalten vorgelegen hat. Je nach Bedarf kann eine feinere Abstufung der Fahrweisenbewertung vorgesehen sein. Das Bewertungsresultat wird einer Rückmeldeeinheit 16 zugeführt und hat zur Folge, dass letztere unterschiedliche Rückmeldungen erzeugen kann, die sich grob in positive, "lobende" Rückmeldungen einerseits und negative, "kritisierende" Rückmeldungen andererseits einteilen lassen, wobei auch hier je nach Bedarf feinere Abstufungen möglich sind. Die einzelnen Rückmeldungen werden von der Rückmeldeeinheit 16 vorzugsweise so kombiniert, dass das Maß an positiven Rückmeldungen dasjenige an negativen Rückmeldungen überwiegt oder in einem bestimmten Verhältnis zu jenem gehalten wird, so dass ein gewollter, für den Fahrer positiver Gesamteindruck der Rückmeldeinformationen während einer Fahrt entsteht und aufrechterhalten bleibt. Dadurch wird die Bereitschaft des Fahrzeugführers, sich dem Bewertungskriterium entsprechend zu verhalten, gezielt verstärkt.

Die Rückmeldeeinheit 16 generiert die bewertenden Rückmeldungen über die Fahrweise in der oder den vorangegangenen Verkehrssituationen während einer jeweiligen Fahrt und/oder nach Fahrtende. Dazu liest sie die von der Fahrzustandsbewertungseinheit 14 generierten und im Situationsspeicher 15 abgelegten Daten aus letzterem aus, unterzieht diese Daten einer geeigneten statistischen Auswertung und kombiniert gegebenenfalls mehrere einzelne Rückmeldungen zu einer auszugebenden Rückmeldeinformation. Dies erfolgt vorzugsweise so, dass in jeder abgegebenen Rückmeldeinformation mindestens eine Einzelrückmeldung der positiven Kategorie enthalten ist und/oder die Anzahl oder die Stärke von Einzelrückmeldungen der positiven Kategorie für jede bewertete Verkehrssituation oder wenigstens für längere Bewertungszeiträume größer ist als diejenige der Einzelrückmeldungen kritisierender Kategorie bzw. dazu in einem bestimmten Verhältnis gehalten wird.

Die Rückmeldeeinheit 16 gibt die erzeugten Rückmeldeinformationen nur in den Zeiträumen an die Ausgabeeinheit 11 ab, in denen die Fahrerbeanspruchung für die bevorstehende Fahraufgabe, wie von der Fahrerbelastungsvorhersageeinheit 7 prognostiziert, nicht über der besagten Schwelle liegt, so dass es dem Fahrzeugführer auch tatsächlich möglich ist, die Rückmeldeinformation aufzunehmen. Unter dieser Nebenbedingung erfolgt die fahrweisenbewertende Rückmeldung durch die Rückmeldeeinheit 16 entweder kontinuierlich, wie nach jedem Auftreten einer bewerteten Verkehrssituation mit sicher oder kritisch beurteiltem Fahrverhalten, oder intermittierend. Intermittierende Rückmeldungen können mit geeigneter Verstärkung erzeugt werden, z.B. durch eine Quotenverstärkung, welche die Stärke von Rückmeldungen von der Häufigkeit des Auftretens der zugehörigen Fahrweise abhängig macht, oder durch eine Zeitintervallverstärkung, welche die Rückmeldungsstärke von der seit der letzten Rückmeldung verstrichenen Zeit abhängig macht. Bei beiden Rückmeldearten kann die Ausgabe der Rückmeldungen in festen Zeitabständen, z.B. alle fünf Minuten, oder in variablen Zeitabständen erfolgen, z.B. das eine Mal nach 3 Minuten und das andere Mal nach 7 Minuten. Die Ausgabeeinheit 11 zeigt die Rückmeldeinformationen geeignet an, z.B. optisch, akustisch und/oder haptisch.

Wie die obige Beschreibung eines vorteilhaften Ausführungsbeispiels zeigt, stellt die Erfindung ein Verfahren und eine Vorrichtung zur Fahrweisenbewertung zur Verfügung, die sich durch im nachhinein abgegebene Fahrweisenbewertungs-Rückmeldeinformationen auszeichnen, mit denen der Fahrzeugführer gezielt und freiwillig zu einem wünschenswerten Fahrverhalten motiviert bzw. angeleitet werden kann. Der Aspekt der Freiwilligkeit erhöht die Akzeptanz des Systems.

Bei Bedarf kann die rückmeldende Fahrweisenbewertung dahingehend erweitert werden, dass direkte persönliche Vorteile für den Fahrzeugführer für positive Bewertungsresultate bereitgestellt werden. So kann vorgesehen sein, für positive Bewertungsergebnisse Bonuspunkte oder Gutschriften zu erteilen und diese z.B. auf einer Chipkarte zu speichern, damit der Fahrer sie z.B. beim nächsten Kundendienstaufenthalt, in bestimmten Geschäften oder bei kulturellen Veranstaltungen einlösen kann. Alternativ oder zusätzlich können positiven Bewertungsresultaten Freieinheiten für ein Mobiltelefon zugeteilt werden, oder es können Beiträge zu einer Fahrzeugversicherung oder Rückerstattungen derselben von den rückgemeldeten Fahrweisenbewertungsergebnissen abhängig gemacht werden.

Neben dem oben vorrangig erwähnten Bewertungskriterium der Erzielung einer hohen Verkehrssicherheit eignet sich die Erfindung selbstverständlich auch für alternative oder zusätzliche Bewertungskriterien. Insbesondere für Berufskraftfahrer mit hoher Kilometerleistung kann z.B. ein nützliches Bewertungskriterium die Erzielung einer unter ökonomischen und ökologischen Aspekten anzustrebenden, möglichst verbrauchsarmen Fahrweise sein.

## Patentansprüche

1. Verfahren zur Fahrweisenbewertung, bei dem
- laufend der aktuelle Fahrzustand anhand von zugehörigen Fahrzustandsparametern und die aktuelle Verkehrssituation anhand von zugehörigen Verkehrssituationsparametern erfaßt werden,
- zur jeweils erfaßten aktuellen Verkehrssituation ein zugehöriger Referenzfahrzustand, der in der betreffenden Verkehrssituation einen gemäß eines vorgebbaren Bewertungskriteriums wünschenswerten Fahrzustand repräsentiert, anhand einer vorgebbaren Verkehrssituations-Referenzfahrzustands-Beziehung ermittelt wird, wobei
- der erfaßte aktuelle Fahrzustand durch Vergleichen mit dem zugehörig ermittelten Referenzfahrzustand gemäß dem Bewertungskriterium bewertet und im nachhinein eine oder mehrere entsprechende Rückmeldeinformationen über die Fahrweise während einer jeweils vorangegangenen Verkehrssituation abgegeben werden, und wobei
als abgebbare Fahrweisen-Rückmeldeinformationen wenigstens zwei Gruppen von Rückmeldeinformationen vorgegeben werden, die zu zwei verschiedenen Werten eines vorgebbaren Kategorieparameters gehören, und ein Rückmeldeerzeugungskriterium dahingehend vorgegeben wird, dass das Maß an während einer Fahrt abgegebenen Rückmeldeinformationen der einen Gruppe größer bleibt als dasjenige der abgegebenen Rückmeldeinformationen der anderen Gruppe oder das Maß an abgegebenen Rückmeldeinformationen der einen Gruppe zu dem der anderen Gruppe in einem vorgebbaren Verhältnis steht.

2. Verfahren nach Anspruch 1, weiter
**dadurch gekennzeichnet, daß**
in Abhängigkeit vom zur aktuellen Verkehrssituation ermittelten Referenzfahrzustand Fahrweisenempfehlungen abgegeben werden.

3. Verfahren nach Anspruch 1 oder 2, weiter
**dadurch gekennzeichnet, daß**
- die Erfassung der aktuellen Verkehrssituation eine Streckenzustandsvorhersage umfaßt und letztere auch dazu verwendet wird, die zu erwartende Fahrerbelastung vorauszuschätzen, und
- die Abgabe der Rückmeldeinformationen oder Fahrweisenempfehlungen nur in Zeiträumen erfolgt, in denen die vorausgeschätzte Fahrerbelastung unter einer vorgebbaren Schwelle liegt.

4. Vorrichtung zur Fahrweisenbewertung mit
- Mitteln (1 bis 4, 12) zur laufenden Erfassung des aktuellen Fahrzustands anhand von zugehörigen Fahrzustandsparametern und Mitteln (1 bis 6) zur laufenden Erfassung der aktuellen Verkehrssituation anhand von zugehörigen Verkehrssituationsparametern, und mit
- einer Referenzbestimmungseinheit (8) zur Ermittlung eines zur erfaßten aktuellen Verkehrssituation gehörigen Referenzfahrzustands, der einen in der betreffenden Verkehrssituation gemäß eines vorgebbaren Bewertungskriteriums wünschenswerten Fahrzustand repräsentiert, und mit
- einer Fahrzustandsbewertungseinheit (14) und einer Rückmeldeeinheit (16) zur Bewertung des erfaßten aktuellen Fahrzustands durch Vergleichen mit dem zugehörig ermittelten Referenzfahrzustand gemäß dem Bewertungskriterium und zum Abgeben einer oder mehrerer entsprechender Rückmeldeinformationen über die Fahrweise während einer jeweils vorangegangenen Verkehrssituation im nachhinein, wobei
die Bewertungseinheit (14) so ausgelegt ist, dass sie Rückmeldungen wenigstens zweier unterschiedlicher Kategorien erzeugt und die Abgabe von Rückmeldeinformationen so abstimmt, dass das Maß an während einer Fahrt abgegebenen Rückmeldeinformationen der einen Gruppe größer bleibt als dasjenige der im entsprechenden Zeitraum abgegebenen Rückmeldeinformationen der anderen Gruppe.

5. Vorrichtung nach Anspruch 4, weiter
**gekennzeichnet durch**
eine Empfehlungserzeugungseinheit (10) zur Erzeugung und Ausgabe von Fahrweisenempfehlungen in Abhängigkeit vom zur aktuellen Verkehrssituation jeweils ermittelten Referenzfahrzustand.

6. Vorrichtung Anspruch 4 oder 5, weiter
**dadurch gekennzeichnet, daß**
- eine Streckenzustandsvorhersageeinheit (5) und eine deren Streckenzustandsschätzdaten nutzende Fahrerbelastungsvorhersageeinheit (7) zur Vorausschätzung der für die anstehende Verkehrssituation zu erwartenden Fahrerbelastung vorgesehen sind und
- die Rückmeldeeinheit (16) so eingerichtet ist, dass sie die Rückmeldeinformationen oder Fahrweisenempfehlungen nur in Zeiträumen abgibt, in denen die vorausgeschätzte Fahrerbelastung unter einer vorgebbaren Schwelle liegt.

## Claims

1. Method for evaluating a driving style, in which
- the current driving state is continuously sensed by reference to associated driving state parameters, and the current traffic situation is continuously sensed by reference to associated traffic situation parameters,
- an associated reference driving state which, in the respective traffic situation, represents a driving state which is desirable with respect to a predefinable evaluation criterion, is determined in relation to the respectively sensed current traffic situation, by means of a predefinable traffic situation reference driving state relation, and
- the sensed current driving state being evaluated by comparison with the respectively determined reference driving state in accordance with the evaluation criterion, and one or more corresponding acknowledgement information items relating to the driving style during a respective preceding traffic situation being retrospectively output,
at least two groups of acknowledgement information items which are associated with two different values of a predefinable category parameter are predefined as driving style acknowledgement information items which can be output, and an acknowledgement generation criterion is predefined that the amount of acknowledgement information items of the one group which are output during a journey remains larger than the amount of acknowledgement information items of the other group which are output or the amount of acknowledgement information items of the one group which are output has a predefinable relationship with that of the other group.

2. Method according to Claim 1, further **characterized in that** driving style recommendations are output as a function of the reference driving state determined in relation to the current traffic situation.

3. Method according to Claim 1 or 2, further **characterized in that**
- the sensing of the current traffic situation comprises a route state prediction and the latter is also used to estimate in advance the expected loading on the driver, and
- the outputting of the acknowledgement information items or driving style recommendations takes place only in time periods in which the loading on the driver which is estimated in advance lies below a predefinable threshold.

4. Device for evaluating a driving style having
- means (1 to 4, 12) for continuously sensing the current driving state by reference to associated driving state parameters and means (1 to 6) for continuously sensing the current traffic situation by reference to associated traffic situation parameters, and having
- a reference-determining unit (8) for determining a reference driving state which is associated with the sensed current traffic situation and which represents a driving state which is desirable in the respective traffic situation in accordance with a predefinable evaluation criterion, and having
- a driving state-evaluation unit (14) and an acknowledgement unit (16) for evaluating the sensed current driving state by comparison with the respectively determined reference driving state in accordance with the evaluation criterion and for retrospectively outputting one or more corresponding acknowledgement information items relating to the driving style during a respectively preceding traffic situation,
the evaluation unit (14) is configured in such a way that it generates acknowledgements of at least two different categories and matches the outputting of acknowledgement information items in such a way that the amount of acknowledgement information items of the one group which are output during a journey remains larger than the amount of acknowledgement information items of the other group which are output in the corresponding time period.

5. Device according to Claim 4, further **characterized by** a recommendation-generating unit (10) for generating and outputting the driving style recommendations as a function of the reference driving state which is respectively determined in relation to the current traffic situation.

6. Device according to Claim 4 or 5, further **characterized in that**
- a route state prediction unit (5) and a driver-loading prediction unit (7) which uses the route state estimation data thereof for estimating in advance the loading on the driver to be expected for the imminent traffic situation are provided, and
- the acknowledgement unit (16) is set up in such a way that it outputs the acknowledgement information items or driving style recommendations only in time periods in which the loading on the driver which has been estimated in advance lies below a predefinable threshold.

## Revendications

1. Procédé d'évaluation du style de conduite, dans lequel
- l'état de conduite actuel, en s'appuyant sur des paramètres d'état de conduite associés, et la situation actuelle du trafic, en s'appuyant sur des paramètres de situation du trafic associés, sont détectés en continu,
- pour chaque situation de conduite actuelle détectée, un état de conduite de référence associé, qui représente, dans la situation du trafic en question, un état de conduite souhaitable selon un critère d'évaluation pouvant être prédéfini, est déterminé en s'appuyant sur une relation pouvant être prédéfinie entre la situation du trafic et l'état de conduite de référence,
- l'état de conduite actuel détecté étant évalué par comparaison avec l'état de conduite de référence déterminé de façon associée selon le critère d'évaluation et rétrospectivement, une ou plusieurs information(s) en retour correspondante(s) concernant le style de conduite pendant chaque situation de trafic précédente étant émise(s), et
au moins deux groupes d'informations en retour, qui appartiennent à deux valeurs différentes d'un paramètre de catégorie pouvant être prédéfini, sont prédéfinis comme informations en retour du style de conduite pouvant être émises, et un critère de génération d'information en retour étant prédéfini en ce sens que la valeur des informations en retour d'un des groupes émises pendant une conduite reste supérieure à celle des informations en retour émises de l'autre groupe ou la valeur des informations en retour émises d'un des groupes est proportionnelle de façon prédéfinie à celle de l'autre groupe.

2. Procédé selon la revendication 1, **caractérisé en outre en ce que** des recommandations du style de conduite sont émises en fonction de l'état de conduite de référence déterminé par rapport à la situation actuelle du trafic.

3. Procédé selon la revendication 1 ou 2, **caractérisé en outre en ce que**
- la détection de la situation actuelle du trafic comporte une prévision de l'état des routes et cette dernière est également utilisée pour estimer à l'avance la contrainte attendue pour le conducteur, et
- l'émission d'informations en retour ou de recommandations du style de conduite ne s'effectue que pendant les intervalles de temps au cours desquels la contrainte prévue pour le conducteur estimée à l'avance se situe au-dessous d'un seuil pouvant être prédéfini.

4. Dispositif d'évaluation du style de conduite comprenant
- des moyens (1 à 4, 12) destinés à détecter en continu l'état de conduite actuel en s'appuyant sur des paramètres d'état de conduite associés et des moyens (1, 6) destinés à détecter en continu la situation actuelle du trafic en s'appuyant sur des paramètres de situation du trafic associés, et comprenant
- une unité de détermination de référence (8) destinée à déterminer un état de conduite de référence appartenant à la situation actuelle détectée du trafic, qui représente un état de conduite souhaitable dans la situation de conduite en question selon un critère d'évaluation pouvant être prédéfini, et comprenant
- une unité d'évaluation de l'état de conduite (14) et une unité d'information en retour (16) destinées à évaluer l'état de conduite actuel détecté par comparaison avec l'état de conduite de référence déterminé associé selon le critère de référence et à émettre rétrospectivement une ou plusieurs information(s) en retour correspondante(s) sur le style de conduite pendant chaque situation de trafic précédente,
l'unité d'évaluation (14) étant étudiée pour générer des informations en retour d'au moins deux catégories différentes et adapter l'émission d'informations en retour de sorte que la valeur des informations en retour d'un des groupes émises pendant une conduite reste supérieure à celle des informations en retour de l'autre groupe émises pendant l'intervalle de temps correspondant.

5. Dispositif selon la revendication 4, **caractérisé en outre par** une unité de génération de recommandation (10) destinée à générer et à délivrer des recommandations de style de conduite en fonction de l'état de conduite de référence respectivement déterminé par rapport à la situation actuelle du trafic.

6. Dispositif selon la revendication 4 ou 5, **caractérisé en ce que**
- une unité de prévision de l'état des routes (5) et une unité de prévision de la contrainte pour le conducteur (7) utilisant ces données de prévision de l'état des routes sont prévues pour estimer à l'avance la contrainte attendue pour le conducteur dans la situation du trafic en suspens et
- l'unité d'information en retour (16) est réglée pour émettre les informations en retour ou les recommandations du style de conduite uniquement pendant les intervalles de temps au cours desquels la contrainte pour le conducteur estimée à l'avance se situe au-dessous d'un seuil pouvant être prédéfini.
